# EUROPÄISCHE PATENTSCHRIFT

(11) **EP 3 692 331 B1**
(45) Veröffentlichungstag und Bekanntmachung des Hinweises auf die Patenterteilung: **15.01.2025**
(21) Anmeldenummer: 19820669.0
(22) Anmeldetag: 06.11.2019
(51) Int. Cl.: G01B 11/06, B21B 38/04

(54) **VORRICHTUNG ZUR BESTIMMUNG DER DICKE EINES OBJEKTS**
DEVICE FOR DETERMINING THE THICKNESS OF AN OBJECT
DISPOSITIF DE DÉTERMINATION DE L'ÉPAISSEUR D'UN OBJET

(30) Priorität: 20.12.2018 DE 102018222678; 21.12.2018 DE 102018222873
(43) Veröffentlichungstag der Anmeldung: 12.08.2020
(73) Patentinhaber: MICRO-EPSILON Messtechnik GmbH & Co. KG, 94496 Ortenburg (DE)
(72) Erfinder: KIRSCHNER, Gerhard, 94036 Passau (DE)
(74) Vertreter: Ullrich & Naumann PartG mbB
(86) Internationale Anmeldenummer: PCT/DE2019/200124
(87) Internationale Veröffentlichungsnummer: WO 2020/125873

(56) Entgegenhaltungen:
- CN-A- 1 958 184
- CN-A- 104 264 555
- DE-U1- 202014 001 175
- JP-A- H0 783 635

## Beschreibung

Die Erfindung betrifft eine Vorrichtung zur Bestimmung der Dicke eines Objekts, insbesondere eines bandförmigen oder plattenförmigen Objekts, vorzugsweise zum Einsatz bei einem Warmwalzprozess, mit einem einen oberen und einen unteren Schenkel aufweisenden Rahmen, wobei jeder Schenkel einen Sensor zur kontaktlosen Abstandsmessung zu dem Objekt aufweist, wobei jeder Schenkel zur Reduzierung einer Temperatureinwirkung auf den Rahmen und/oder den Sensor einen Aufbau aus mehreren Schichten aufweist, wobei eine erste Schicht ein Basisrahmenelement aufweist oder durch ein solches Basisrahmenelement gebildet ist, wobei eine zweite Schicht durch einen das Basisrahmenelement umgebenden Mantel gebildet ist und wobei im Basisrahmenelement eine Kühleinrichtung mit einem Lüfter angeordnet ist.

Derartige Vorrichtungen sind aus der Praxis bekannt und existieren in unterschiedlichen Ausführungsformen, wobei entsprechende Rahmen beispielsweise als sog. C-förmige Rahmen oder Messrahmen ausgebildet sind, die zwei mit einem Verbindungsstück gekoppelte Schenkel aufweisen, zwischen denen ein zu messendes Objekt oder Messobjekt für die Messung einzubringen ist. In diesem Fall sind häufig an beiden Schenkeln entsprechende Sensoren zur Messung eines Abstands angebracht.

Bei einer Messung der Dicke bewegter oder stillstehender, bandförmiger oder plattenförmiger Werkstoffe werden häufig Messanlagen eingesetzt, bei denen ganz konkret Abstandssensoren in einem C-förmigen Messrahmen angebracht sind. Dabei misst jeweils ein Abstandssensor oberhalb und unterhalb des bandförmigen oder plattenförmigen Messobjekts den Abstand von dem jeweiligen Sensor zur Oberfläche des Objekts. Aus dem bekannten Abstand der Sensoren zueinander kann die Dicke des Objekts bestimmt werden. Problematisch ist hierbei jedoch, dass sich der Abstand der Sensoren zueinander aufgrund äußerer Einflüsse wie beispielsweise durch Temperaturänderungen ändern kann. Bei einer Temperaturänderung kann sich die Rahmenkonstruktion aufgrund des materialeigenen Temperaturausdehnungskoeffizienten ausdehnen oder deformieren, was zu einer Änderung der relativen Position der Sensoren zueinander und somit zu Messfehlern bei der Dickenmessung führt. Weiterhin führen ungleichmäßig - zeitlich wie räumlich - auftretende Temperaturen dazu, dass aufgrund der unterschiedlichen Temperaturausdehnung Spannungen in der Rahmenkonstruktion auftreten können, die ebenfalls die Messung beeinträchtigen.

Es gibt unterschiedliche Konzepte in Bezug auf Ausführung und Materialzusammensetzung, die ermöglichen sollen, mit einer entsprechenden Vorrichtung in Form beispielsweise einen C-Rahmens - trotz Temperaturänderung des Umfelds und/oder Targets bzw. Objekts - stabile Messwerte zu liefern. Für Anwendungen bei vergleichsweise stabilen Umgebungsbedingungen eignen sich zumeist konventionelle Lösungen.

Gemäß dem Stand der Technik ist beispielsweise aus der DE 20 2014 001 175 U1 eine entsprechende Vorrichtung zur Bestimmung der Dicke eines Objekts in Form von bewegten, bandförmigen und plattenförmigen Werkstoffen bekannt, wobei diese Vorrichtung vorzugsweise zum Einsatz beim Kaltwalzen dient und die wesentlichen Merkmale des Obergriffs des Anspruchs 1 aufweist. Gemäß diesem Stand der Technik werden Schenkel eines C-Rahmens mit Kupferrohren umwickelt, die in einem geschlossenen Kreislauf - ohne Kühlung oder Heizung - mit Flüssigkeit durchströmt sind. Ziel dieser Anordnung ist es, ungleichmäßige Temperaturveränderungen im C-Rahmen zu unterbinden. Die Auswirkung von Temperaturänderungen soll mit Dehnungsmessstreifen ermittelt und kompensiert werden. Beim Kaltwalzen wird das Material vor dem Walzen nicht erwärmt. Lediglich durch die eingebrachte Umformungsenergie erwärmt sich das Material beim Durchlaufen der Walzstraße geringfügig, wobei diese Erwärmung von Umgebungsbedingungen und einer möglichen Kühlung abhängig ist.

Diese Ausführung bietet keine Lösung für den Umgang mit der im Warmwalzbereich anfallenden Wärmebelastung, da beim Warmwalzen Temperaturen bis 1200°C erreicht werden.

Bei stärkeren Schwankungen von Temperatur und Wärmestrahlung der Umgebung haben derartige bekannte Lösungen den Nachteil, dass durch den Flüssigkeitskreislauf - in Verbindung mit der Wärmeleitung vom Messschenkel zum Kupferrohr - relativ große Energiemengen punktuell zu- oder abgeführt werden. Hierbei ergeben sich zahlreiche Probleme wie beispielsweise eine schnelle Änderung des Abstands zwischen den Sensoren, die durch die punktuelle Wärmeausdehnung bedingt ist, wobei weiterhin ein Verzug durch Temperaturunterschiede von Kühlmittelvorlauf und -rücklauf und der daraus resultierenden Temperaturunterschiede am Rahmen entstehen kann. Dies steht bei der bekannten Vorrichtung im Widerspruch zum angestrebten trägen System, welches sich dadurch auszeichnen soll, dass Änderungen in den Umgebungsbedingungen sich nur so langsam auf den Abstand der Sensoren auswirken, dass zwischen zwei möglichen Kalibrier- oder Nullungs-Zyklen keine - für die Messgenauigkeit relevante - Fehler auftreten.

Bei C-Rahmen für den Warmwalzbereich beträgt die Verbindungslänge zwischen den beiden Sensoren - einer pro Materialseite - entlang dem Rahmen meist mehrere Meter. Diese Verbindungslänge setzt sich aus der Länge des oberen und des unteren Schenkels des C-Rahmens sowie dem Verbindungsstück zwischen den Schenkeln zusammen, das im Wesentlichen den Messabstand der Sensoren definiert. Eine gleichmäßige Temperaturänderung wirkt sich im Wesentlichen durch eine Längenänderung im Bereich des Verbindungsstücks aus, wobei diese Längenänderung den Dickenmesswert direkt beeinflusst. Da die Längenänderung der Schenkel näherungsweise identisch ist und senkrecht zur Messachse liegt, kann dieser Einfluss auf den Dickenmesswert vernachlässigt werden.

Kommt es weiterhin zu einem seitlichen Versatz der Sensoren aufgrund unterschiedlicher Längenausdehnungen des oberen und des unteren Schenkels, liegen die Messpunkte der Sensoren nicht mehr direkt gegenüber, was insbesondere bei einer Verkippung des Messobjekts oder Objekts zu Fehlern bei der Dickenmessung führt.

In der Praxis wirken sich unterschiedliche Temperaturveränderungen innerhalb eines Schenkels - an der dem zweiten Schenkel zugewandten und an der dem zweiten Schenkel abgewandten Seite - gravierend aus. Denn hierdurch entsteht ein dem Verzug von Bimetall bei dessen Erwärmung vergleichbarer Verzug, der sich direkt als Messfehler auswirkt.

In der Praxis ist der Temperatureintrag auf den C-Rahmen jedoch nicht gleichmäßig. Grund dafür sind einerseits die hohen Belastungen durch eine Wärmeabstrahlung des Targets beim Warmwalzen, wobei als Größenordnung für die Wärmeabstrahlung von rotglühendem Stahl etwa 170 kW/m² angesetzt werden, und zum anderen die resultierende Wärmekonvektion, die bei diesem Umfeld auftritt. Selbst ein Rahmen aus einem Material mit besonders geringem Temperaturausdehnungskoeffizienten wie beispielsweise Invar^{®} hätte eine viel zu große Temperaturdrift, um eine präzise Dickenmessung zu ermöglichen.

Des Weiteren ist aus der JP H07 83635 A eine Vorrichtung zur Bestimmung der Dicke eines Objekts bekannt. Dieses Dokument zeigt eine Strahlungsschutzeinrichtung für einen Rahmen und keine Strömungsführung für ein Fluidum.

Weiterhin ist aus der CN 104 264 555 A ein für Sensorsignale durchlässiges Wärmeschutzglas bekannt.

Weiterhin zeigt die CN 1 958 184 A eine Vorrichtung zur Bestimmung der Dicke eines Objekts, wobei im Konkreten unterschiedliche Kühlsysteme für einen Rahmen offenbart sind.

Der vorliegenden Erfindung liegt daher die Aufgabe zugrunde, eine Vorrichtung der eingangs genannten Art anzugeben, wonach eine sichere Messung der Dicke eines Objekts auch in einem Umfeld mit hohen Temperaturen mit konstruktiv einfachen und kostengünstigen Mitteln ermöglicht ist.

Erfindungsgemäß wird die voranstehende Aufgabe durch eine Vorrichtung mit den Merkmalen des Anspruches 1 gelöst. Danach ist die erfindungsgemäße Vorrichtung derart ausgestaltet und weitergebildet, dass durch den Lüfter eine Luftströmung erzeugbar ist, welche im Zwischenraum zwischen Basisrahmenelement und Mantel strömt.

Bei dieser Vorrichtung sind die Schenkel mehrschichtig aufgebaut, um vorzugsweise in mehreren Stufen eine Reduzierung einer Temperatureinwirkung auf den Rahmen und/oder den Sensor bei besonders hohen und/oder tiefen Temperaturen und/oder bei starken Temperaturänderungen während einer Messung zu ermöglichen. Jede Schicht kann für sich gesehen eine Reduzierung einer Temperatureinwirkung auf den Rahmen und/oder den Sensor durch beispielsweise Wärmeabfuhr oder einen Schutz vor Wärmestrahlung realisieren. Bei der Vorrichtung lässt sich einerseits ein Schutz des Sensors oder auch mehrerer Sensoren vor einer Temperatureinwirkung durch beispielsweise zu hohe oder sehr hohe Umgebungstemperaturen realisieren. Zum anderen ist für das Ziel einer besonders sicheren Messung mit hoher Messgenauigkeit der Dickenmessung von großer Bedeutung, dass auch der Rahmen mit beispielsweise einem Basisrahmenelement und erforderlichenfalls vorgesehenen Verbindungsstücken zwischen Schenkeln und damit eine Verbindung zwischen Sensoren geschützt ist. Dies wird ebenfalls durch den Schichtaufbau der Schenkel realisiert. Letztendlich entstehen Messfehler dadurch, dass sich die Struktur der Vorrichtung mit dem Rahmen und dessen Bauteilen aufgrund der Temperatur verbiegt. Ein derartiger mehrschichtiger Aufbau lässt sich kostengünstig realisieren.

Bei einer vorteilhaften Ausgestaltung der Vorrichtung ist das Basisrahmenelement als Hohlkörper ausgebildet. Diese erste Schicht bildet eine sichere und stabile Grundstruktur der Vorrichtung.

In weiter vorteilhafter Weise kann der Sensor dem Basisrahmenelement zugeordnet oder in dem Basisrahmenelement angeordnet sein. Insbesondere bei einer Anordnung des Sensors in dem Basisrahmenelement ist eine Abschirmung des Sensors von äußeren Temperatureinflüssen durch das Basisrahmenelement bereitgestellt.

In dem Basisrahmenelement ist eine Kühleinrichtung angeordnet, die als aktive oder passive Kühleinrichtung ausgeführt sein kann. Die Kühleinrichtung kann in einem Verbindungsstück des Basisrahmenelements, beispielsweise bei einer C-förmigen Ausgestaltung des Rahmens, angeordnet sein. Hierdurch ist eine sichere und geschützte Anordnung der Kühleinrichtung realisiert, wobei weiterhin ein besonders kompakter Aufbau der Vorrichtung durch diese Anordnung bereitgestellt ist.

Im Hinblick auf eine besonders sichere Kühlwirkung kann die Kühleinrichtung ein mit einem Kühlmedium gefülltes Kühlregister aufweisen. Das Kühlregister dient hierbei zum Abkühlen und/oder Temperieren eines zur Kühlung dienenden Fluidums wie beispielsweise Umgebungsluft. Insbesondere im Fall einer solchen Realisierung einer Kühleinrichtung kann das Basisrahmenelement mit Umgebungsluft durchströmbar sein. Hierbei kann mittels der Kühleinrichtung und dem Kühlmedium temperierte Luft durch das Basisrahmenelement zu dem Sensor geströmt werden, um eine entsprechende Kühlwirkung oder Temperierung bei dem Sensor zu erreichen.

Die Luftströmung kann in besonders vorteilhafter Weise mittels einer Vorströmung von der Kühleinrichtung zu dem Sensor und einer Rückströmung von dem Sensor zur Kühleinrichtung zurück realisiert sein. Hierdurch kann ein vorzugsweise geschlossener Kreislauf der Luft realisiert werden.

Bei einer weiter vorteilhaften Ausgestaltung der erfindungsgemäßen Vorrichtung kann die zweite Schicht einen im Wesentlichen geschlossenen Mantel für die erste Schicht aufweisen oder durch einen solchen Mantel gebildet sein. Diese die erste Schicht ummantelnde zweite Schicht bildet quasi ein Schutzschild gegen eine äußere Temperatureinwirkung für die erste Schicht. Wärmestrahlung kann durch die zweite Schicht von der ersten Schicht in wesentlichem Umfang abgehalten werden. Des Weiteren kann durch den Aufbau aus einer ersten Schicht und einer die erste Schicht ummantelnde zweite Schicht ein Strömungskanal für eine Fluidströmung, vorzugsweise in Verbindung mit einer Kühleinrichtung, gebildet werden. Dabei kann die Rückströmung oder die Vorströmung, beispielsweise zu oder von einer Kühleinrichtung, zwischen dem Mantel und dem Basisrahmenelement realisiert sein. Ein entsprechender Strömungskanal kann durch einen Spalt oder Zwischenraum zwischen der ersten Schicht und der zweiten Schicht gebildet sein.

In weiter vorteilhafter Weise kann der Mantel aus mehreren Segmenten aufgebaut sein, wobei die einzelnen Segmente vorzugsweise mittels elastischer Membranen gekoppelt sind, die die einzelnen Segmente vorzugsweise luftdicht miteinander verbinden und aufgrund von Temperaturausdehnungen auftretende Längenänderungen aufnehmen und kompensieren können.

Zusätzlich zu der ersten und/oder der zweiten Schicht kann noch eine weitere Schicht vorgesehen werden, die eine Strahlungsschutzeinrichtung, vorzugsweise ein Strahlungsschutzblech, für die erste oder die zweite Schicht aufweist oder durch eine solche Strahlungsschutzeinrichtung gebildet ist. Eine derartige weitere Schicht kann in besonders vorteilhafter Weise eine weitere Stufe für eine Reduzierung äußerer Temperatureinflüsse auf den Sensor bilden.

Hinsichtlich einer sicheren Kompensation oder Aufnahme von temperaturbedingten Längenänderungen oder Ausdehnungen der einzelnen Schichten kann die weitere Schicht an der ersten Schicht oder an der zweiten Schicht vorzugsweise mittels einer Führung, insbesondere Kulissenführung, relativ zu der ersten Schicht oder der zweiten Schicht bewegbar oder verschiebbar gelagert sein. Die Lagerung von der weiteren Schicht an der ersten Schicht kann in dem Fall realisiert sein, wenn keine zweite Schicht realisiert ist.

In weiter vorteilhafter Weise können oder kann der Mantel und/oder die Strahlungsschutzeinrichtung aus einem vorzugsweise polierten und/oder glänzenden Metall ausgebildet sein. Hierdurch ist eine besonders sichere Reflexion von auf den Mantel oder die Strahlungsschutzeinrichtung auftreffender Wärmestrahlung mit einer entsprechenden Schutzwirkung für den Sensor ermöglicht. In besonders vorteilhafter Weise kann als Material des Mantels und/oder der Strahlungsschutzeinrichtung ein Material mit einem geringen Emissionsgrad vorgesehen sein. Ein derartiges Material reflektiert auftreffende Wärmestrahlung sehr effizient.

Hinsichtlich einer sicheren Messung können oder kann die erste Schicht und/oder die zweite Schicht und/oder die weitere Schicht einen vorzugsweise mit einem Glas oder Wärmeschutzglas verschlossenen Durchgang für Sensorsignale zu und/oder von dem Objekt aufweisen. Hierdurch ist gewährleistet, dass beispielsweise optische Sensorsignale ungestört durch die realisierten Schichten zwischen Sensor und Objekt passieren können.

Im Hinblick auf eine weitere Reduzierung von Temperatureinwirkungen auf den Rahmen und/oder den Sensor kann zwischen der zweiten Schicht und der weiteren Schicht ein mit einem vorgebbaren Fluidum, vorzugsweise mit Umgebungsluft, durchströmbarer Zwischenraum zur Erzeugung einer Fluidschicht gebildet sein. Eine derartige Fluidschicht bildet eine sichere thermische Isolierung zwischen den jeweiligen Schichten, da insbesondere Umgebungsluft in hohem Maß isolierend wirkt. Als Fluidum können auch geeignete isolierende Gase verwendet werden.

Zur Vermeidung von Wärmeleitungen zwischen den Schichten können oder kann die erste Schicht mit der zweiten Schicht oder der weiteren Schicht und/oder die zweite Schicht mit der weiteren Schicht über ein punktuell wirkendes Verbindungsmittel gekoppelt sein. Ein derartiges Verbindungsmittel kann durch einen oder mehrere punktuelle Abstandshalter zwischen den Schichten realisiert sein, wobei ein derart punktuell wirkendes Verbindungsmittel eine nur sehr geringe Wärmeleitung zwischen den Schichten zulässt.

Mit der erfindungsgemäßen Vorrichtung ist beispielsweise eine Vorrichtung mit einem C-förmigen Rahmen realisierbar, der einerseits kostengünstig ist und bei dem die Verbindung zwischen den beiden Sensoren von einer Temperatureinwirkung der Umgebung und der daraus resultierenden Krafteinwirkung weitestgehend entkoppelt ist. Eine möglicherweise erforderliche zusätzliche Kühlleistung für den Rahmen und die Sensoren kann minimal gehalten werden. Insoweit ist mit der erfindungsgemäßen Vorrichtung ein Konzept realisiert, mit dem ein Einfluss von Umgebungsbedingungen auf die Dickenmessung minimiert ist.

Im Folgenden werden wesentliche Aspekte von Ausführungsbeispielen der erfindungsgemäßen Vorrichtung erläuternd zusammengefasst:
Mit der vorliegenden Erfindung ist ein mehrstufiges Kühlkonzept mit einem bevorzugt geschlossenen Kühlkreislauf realisierbar. Das Kühlkonzept besteht bei der beispielsweisen Ausgestaltung des Rahmens als C-förmiger Rahmen zunächst darin, den C-förmigen Rahmen oder Verbindungsrahmen der Sensoren von Temperatureinflüssen aus der Umgebung zu entkoppeln. Dazu können verschiedene Maßnahmen getroffen werden, um den Einfluss der Umgebungstemperatur einschließlich des durch die Wärmestrahlung auftretenden Temperatureintrags auf die Rahmenkonstruktion zu minimieren. Im Folgenden wird beispielhaft der Aufbau eines Ausführungsbeispiels eines erfindungsgemäßen C-Rahmens von außen nach innen beschrieben:
In einer ersten Stufe wird sozusagen als äußerste Schicht ein Strahlungsschutzblech angebracht. Es besteht aus poliertem/glänzendem Metall, beispielsweise einem Stahl oder Edelstahl mit geringem Emissionsfaktor als Maß für den gerichteten thermischen Emissionsgrad. Da nach dem Kirchhoffschen Gesetz der gerichtete thermische Emissionsgrad gleich dem Absorptionsgrad ist, reflektiert ein Material mit geringem Emissionsfaktor oder Emissionsgrad auftreffende Wärmestrahlung sehr effizient.

Das Strahlungsschutzblech ist an einem Mantel aufgehängt. Die Verbindung ist so ausgestaltet, dass eine unterschiedliche Wärmeausdehnung der verwendeten Materialien ausgeglichen wird, beispielsweise durch eine Kulissenführung.

Bei einer versuchsweise installierten Vorrichtung steigt die Temperatur der dem Target abgewandten Seite des Blechs innerhalb von weniger als zehn Minuten um bis zu 150°C an.

Eine zweite Stufe besteht aus einem Luftspalt zwischen dem Strahlungsschutzblech und dem darunter liegenden Mantel. Luft hat isolierende Eigenschaften und dient weiterhin dem Wärmetransport. Die erste Strahlungsschutzschicht - das Strahlungsschutzblech - ist nicht luftdicht abgeschlossen, so dass in der zweiten Stufe die Wärme durch Konvektion abgeführt wird.

Eine dritte Stufe besteht aus dem Mantel, der wiederum aus poliertem/glänzendem Metall, beispielsweise einem Stahl oder Edelstahl mit geringem Emissionsgrad besteht.

Dieser Mantel umhüllt ein Basisrahmenelement oder den Basis-C-Rahmen annäherend luftdicht, ist aber nur an der Basisfläche - Schnittstelle zur Linearachse - und im vorderen Bereich der Messschenkel mit diesem mechanisch verbunden. An der Stelle, wo der Mantel die Sensoren überdeckt, weist der Mantel jeweils eine Öffnung auf, so dass der Strahlengang der optischen Sensoren nicht beeinträchtigt wird. Um eine Luftdichtigkeit herzustellen, sind die Öffnungen mit einem Wärmeschutzglas verschlossen. Das Wärmeschutzglas ist durchlässig für die optische Strahlung der Sensoren, beispielsweise Laserstrahlung, blockiert jedoch die im Infraroten liegende Wärmestrahlung. Hierdurch kann erreicht werden, dass die Temperaturschwankung der Innenseite des Mantels oder Mantelblechs nur noch etwa ein Viertel im Vergleich zum Strahlungsschutzblech beträgt.

Eine vierte Stufe besteht wiederum aus einem Luftspalt, der zwischen Mantel und dem Basisrahmenelement vorliegt. Innerhalb des Luftspalts zirkuliert Luft in einem aktiven und geschlossenen Kühlkreislauf.

Eine letzte Stufe bildet der eigentliche Basis-C-Rahmen oder das Basisrahmenelement. Dieser oder dieses beinhaltet die Sensoraufnahmen an den Schenkelenden und das Kühlregister im Inneren des Verbindungsstücks. Er oder es ist als Hohlkörper ausgeführt, der von der Luft des Kühlkreises durchströmt wird.

Zur Luftführung zirkuliert die innerhalb des Mantels eingeschlossene Luft mittels eines Lüfters wie folgt: Vom Lüfter, der sich im Inneren des Verbindungsstücks im Basisrahmenelement befindet, strömt die Luft über das Kühlregister durch die Schenkel des Basisrahmenelements zu den Sensoren. Das Kühlregister enthält ein Kühlmedium und Kühlrippen, die für eine effiziente Wärmeübertragung von der Kühlluft auf das Kühlmedium sorgen. Mittels des Kühlmediums wird die Wärme aus dem Basisrahmenelement nach außen abgeführt, beispielsweise über einen Außenlüfter. Von den Sensoren strömt die Luft zwischen der Außenseite des Basisrahmenelements und dem Mantel zurück zum Lüfter. Hierdurch wird erreicht, dass nahezu keine Temperaturschwankung mehr am Basisrahmenelement auftritt.

Durch die oben genannten Maßnahmen wird somit die außen am Dickenmesssystem bzw. der Vorrichtung auftretende hohe Umgebungstemperatur sehr effizient stufenweise soweit reduziert, dass am Basisrahmenelement und damit auch am Ort der Sensoren moderarte Temperaturen vorherrschen, die erstens im für die Sensoren zulässigen Temperaturbereich liegen und zweitens die Messung nicht beeinträchtigen.

Das hieraus resultierende gestufte Temperaturprofil im Querschnitt der Messanlage oder Vorrichtung führt jedoch dazu, dass beispielsweise das Strahlungsschutzblech eine deutlich höhere Temperatur aufweist als der Mantel. Aufgrund der unterschiedlichen Ausdehnung führt dies zu einer relativen Verschiebung des Strahlungsschutzblechs gegenüber dem Mantel.

Damit mechanische Spannungen vermieden werden, sind das Strahlungsschutzblech und der Mantel lediglich über wenige Punkte miteinander verbunden. Diese Punkte sind so ausgelegt, dass keine starre Verbindung besteht. Vielmehr sind diese schwimmend gelagert. Die Ausführung ermöglicht somit eine unterschiedliche Wärmeausdehnung der beiden Schichten.

Dasselbe gilt auch für die nächste Schicht, den Mantel. Der Mantel ist in mehrere Segmente aufgeteilt, die jeweils mit einer elastischen Membran luftdicht verbunden werden. Die Membranen können die auftretenden Längenänderungen aufgrund der Temperaturausdehnung aufnehmen und kompensieren. Auch die Verbindungssegmente zwischen Steher und Sensorkopf sind schwimmend gelagert, um Schwankungen bei der Krafteinleitung in das Basisrahmenelement zu minimieren.

Das mehrstufige Kühlkonzept führt dazu, dass nur eine minimale Kühlleistung erforderlich ist. Der überwiegende Teil der anfallenden Strahlungswärme wird bereits durch das Strahlungsschutzblech vom Mantel abgehalten. Des Weiteren ist die Rückseite der Schutzbleche durch den aufgrund der Konvektion entstehenden Luftzug gekühlt.

Die Wärmeleitung vom Mantel in das Basisrahmenelement ist konstruktiv nahezu unterbunden, indem mechanische Verbindungen zwischen Mantel und Basisrahmenelement reduziert sind. Durch die Luftkühlung in dieser Stufe wird der Mantel gekühlt, wobei für den Mantel wenig Kühlleistung aufgebracht werden muss, da er sich erwärmen kann - in der Praxis um bis zu 40°C -, ohne die Dickenmessung zu beeinflussen. Die Wärmeaufnahme des Basisrahmenelements durch die Wärmestrahlung des Mantels ist in diesem Temperaturbereich gering, da sowohl abstrahlende als auch aufnehmende Fläche einen geringen Emissionsfaktor oder Emissionsgrad aufweisen.

Die im Kühlregister gekühlte Luft strömt direkt im Innenraum des Basisrahmenelements zu den Sensoren, so dass sowohl das Basisrahmenelement als auch die Sensoren nahezu keine Temperaturschwankung im Betrieb mehr aufweisen.

Durch die oben aufgeführten Maßnahmen ist der Einfluss der Umgebungsbedingungen auf die Dickenmessung weitestgehend eliminiert.

Die größte verbleibende Störgröße ist die unterschiedliche Erwärmung jeweils innerhalb eines Schenkels - an der dem zweiten Schenkel zugewandten bzw. abgewandten Seite. Durch die Länge der Schenkel reichen hier Unterschiede im Bereich von wenigen 1/10 °C aus, um relevante Messfehler zu erzeugen. Die Temperaturen an den relevanten Stellen werden hierzu gemessen und der Effekt auf die Dickenmessung ermittelt. Im Betrieb kann der entstehende Fehler durch die Einbeziehung eines Korrekturwerts nahezu vollständig eliminiert werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung eines bevorzugten Ausführungsbeispiels der erfindungsgemäßen Vorrichtung anhand der Zeichnung zu verweisen. In Verbindung mit der Erläuterung des bevorzugten Ausführungsbeispiels anhand der Zeichnung werden auch im Allgemeinen bevorzugte Ausgestaltungen und Weiterbildungen der Lehre erläutert. In der Zeichnung zeigen
- Fig. 1: in einer Seitenansicht - A - und in einer Vorderansicht - B - ein Ausführungsbeispiel einer erfindungsgemäßen Vorrichtung zur Bestimmung der Dicke eines Objekts,
- Fig. 2: einen Querschnitt, vergrößert, durch einen oberen Schenkel der Vorrichtung gemäß Fig. 1,
- Fig. 3: einen Querschnitt, vergrößert, durch einen unteren Schenkel der Vorrichtung gemäß Fig. 1 und
- Fig. 4: in einer Seitenansicht, geschnitten, die Vorrichtung aus Fig. 1.

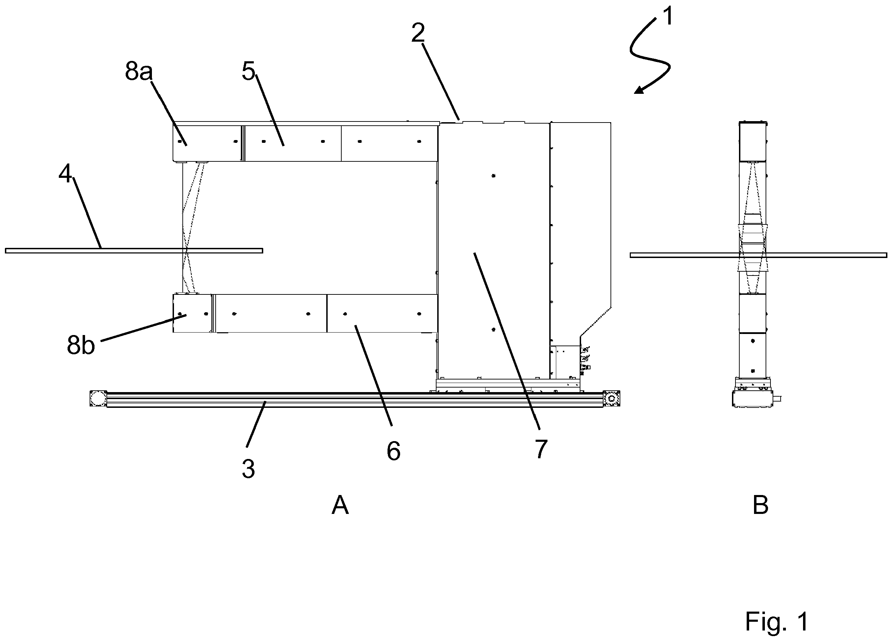

Fig. 1 zeigt in einer Seitenansicht - A - und in einer Vorderansicht - B - ein Ausführungsbeispiel einer erfindungsgemäßen Vorrichtung 1. Ein C-förmiger Rahmen 2 ist auf einer Linearachse 3 so gelagert, dass er gegenüber dem zu vermessenden Objekt 4, beispielsweise eine Stahlbahn 4, traversierend verfahren werden kann. Somit wird quer zur Bewegungsrichtung der Stahlbahn 4 eine Messspur aufgezeichnet. Der C-förmige Rahmen 2 besteht aus einem oberen Schenkel 5 und einem unteren Schenkel 6, die über ein Verbindungsstück 7 miteinander verbunden sind. Am äußeren Ende eines jeden Schenkels 5, 6 befindet sich jeweils ein optischer Abstandssensor 8a, 8b, beispielsweise ein Laser-Profilsensor. Der obere Sensor 8a misst gegen die Oberseite des Stahlbands oder der Stahlbahn 4, der untere Sensor 8b gegen die Unterseite des Stahlbands bzw. der Stahlbahn 4. Aus den beiden Messwerten sowie dem bekannten Abstand der Sensoren 8a, 8b zueinander kann die Dicke des Stahlbands oder der Stahlbahn 4 bestimmt werden.

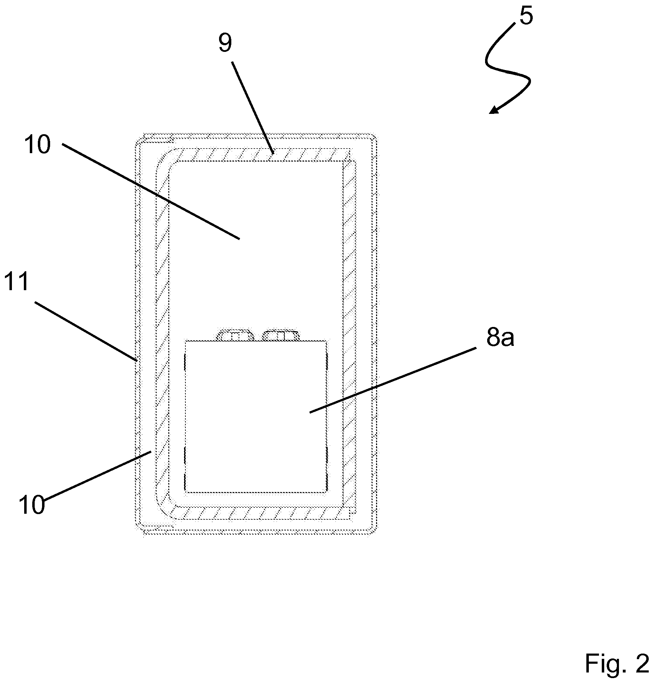

Fig. 2 zeigt einen Querschnitt durch den oberen Schenkel 5 des C-Rahmens 2. An einem inneren Basisrahmenelement 9 ist der Sensor 8a befestigt. Das Innere des Basisrahmenelements 9 wird von Kühlluft 10 durchströmt, die auch an den Sensoren 8a, 8b vorbeiströmt und diese kühlt. Das Basisrahmenelement 9 ist von einem Mantel 11 umgeben. Dieser ist zum Basisrahmenelement 9 beabstandet angeordnet, und zwar mit nur wenigen, punktförmigen Befestigungen (nicht gezeigt), so dass Wärmebrücken möglichst vermieden sind. Weiterhin strömt Kühlluft 10 zwischen Mantel 11 und Basisrahmenelement 9.

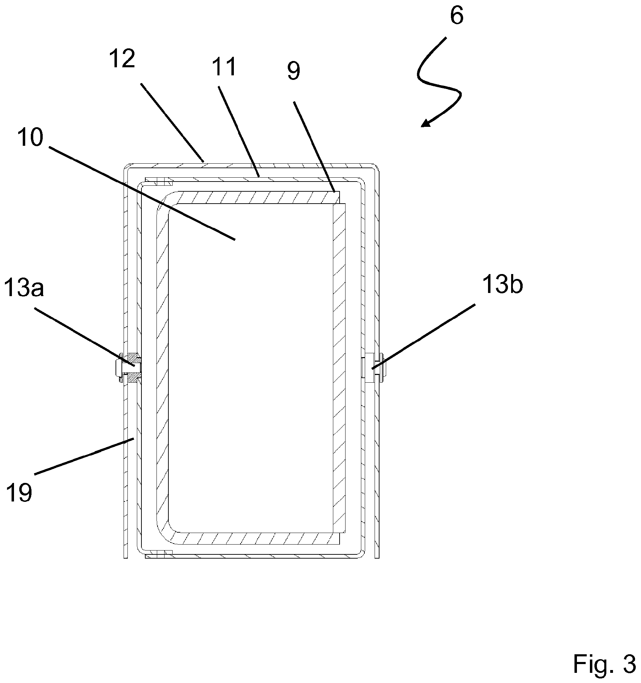

Fig. 3 zeigt einen Querschnitt durch den unteren Schenkel 6 des C-Rahmens 2, wobei der untere Schenkel 6 zusätzlich mit einem Strahlungsschutzblech 12 versehen ist. Dieses Strahlungsschutzblech 12 ist ebenfalls durch punktuelle Abstandshalter 13a, 13b mit dem Mantel 11 verbunden. Die Abstandshalter 13a, 13b sind schwimmend ausgeführt, so dass Bewegungen des Strahlungsschutzblechs 12 aufgrund der unterschiedlichen Temperaturausdehnung nicht auf den Mantel 11 übertragen werden. Das Strahlungsschutzblech 12 ist nicht luftdicht abgeschlossen, so dass die Erwärmung einer Luftschicht 19 zwischen Strahlungsschutzblech 12 und Mantel 11 mit Hilfe der Konvektion reduziert wird.

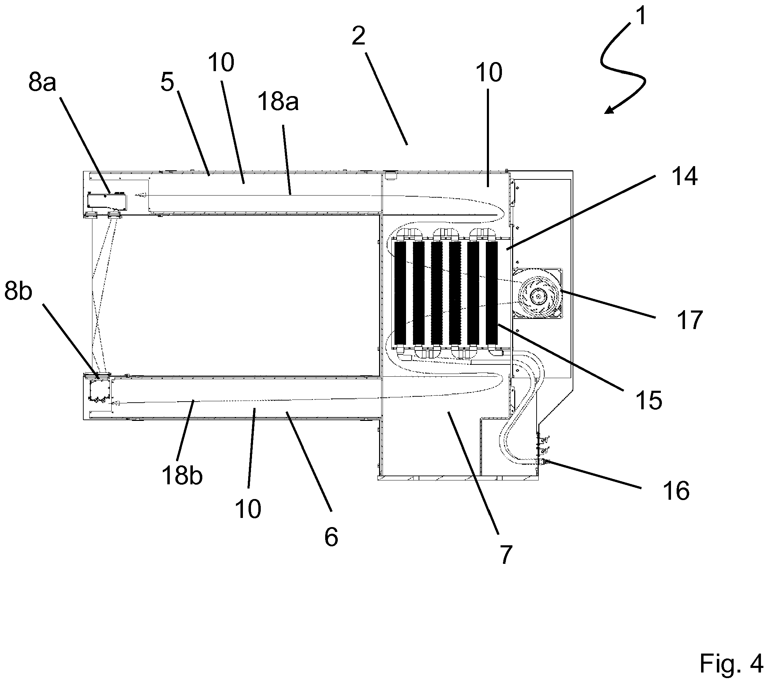

Fig. 4 zeigt ein seitliches Schnittbild durch den C-Rahmen 2. Im Verbindungsstück 7 zwischen oberem Schenkel 5 und unterem Schenkel 6 ist ein Kühlregister 14 angebracht. Das Kühlregister 14 besitzt Kühlrippen 15 zum Wärmeaustausch mit der Kühlluft 10. Im Kühlregister 14 dient eine Kühlflüssigkeit zum Abtransport der Wärme über einen Anschluss 16 nach außen. Mit Hilfe eines Lüfters 17 im Inneren des C-Rahmens 2 wird eine Luftströmung 18a, 18b erzeugt. Die Luft strömt vom Kühlregister 14 im Inneren des Basisrahmenelements 9 im Inneren des oberen Schenkels 5 und unteren Schenkels 6 zu den Sensoren 8a, 8b. Von dort strömt die Kühlluft 10 dann im Zwischenraum zwischen Basisrahmenelement 9 und Mantel 11 wieder zurück zum Kühlregister 14, wo die Kühlluft 10 die aufgenommene Wärme wieder abgibt. Es entsteht somit ein geschlossener Kühlkreislauf im Inneren des C-Rahmens 2.

Mit dem Ausführungsbeispiel der erfindungsgemäßen Vorrichtung ist eine Vorrichtung zur Bestimmung der Dicke bahnförmiger oder plattenförmiger Objekte 4, insbesondere zum Einsatz beim Warmwalzen, bereitgestellt, die aus einem C-Rahmen 2 mit einem oberen Schenkel 5 und einem unteren Schenkel 6 und einem Verbindungsstück 7 besteht, wobei mindestens an einem Schenkel 5, 6 ein optischer Sensor 8a, 8b zur Bestimmung der Dicke angeordnet ist. Zur Eliminierung des Temperatureinflusses auf den mindestens einen Sensor 8a, 8b ist der den Sensor 8a, 8b tragende Schenkel 5, 6 des C-Rahmens 2 mehrschichtig aufgebaut.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf dieses Ausführungsbeispiel einschränkt.

### Bezugszeichenliste

- 1: Vorrichtung
- 2: C-förmiger Rahmen
- 3: Linearachse
- 4: Objekt, Stahlbahn
- 5: oberer Schenkel
- 6: unterer Schenkel
- 7: Verbindungsstück
- 8a: Sensor
- 8b: Sensor
- 9: Basisrahmenelement
- 10: Kühlluft
- 11: Mantel
- 12: Strahlungsschutzblech
- 13a: Abstandshalter
- 13b: Abstandshalter
- 14: Kühlregister
- 15: Kühlrippen
- 16: Anschluss
- 17: Lüfter
- 18a: Luftströmung
- 18b: Luftströmung
- 19: Luftschicht

## Patentansprüche

1. Vorrichtung (1) zur Bestimmung der Dicke eines Objekts (4), insbesondere eines bandförmigen oder plattenförmigen Objekts (4), vorzugsweise zum Einsatz bei einem Warmwalzprozess, mit einem einen oberen und einen unteren Schenkel (5, 6) aufweisenden Rahmen (2), wobei jeder Schenkel (5, 6) einen Sensor (8a, 8b) zur kontaktlosen Abstandsmessung zu dem Objekt (4) aufweist, wobei jeder Schenkel (5, 6) zur Reduzierung einer Temperatureinwirkung auf den Rahmen (2) und/oder den Sensor (8a, 8b) einen Aufbau aus mehreren Schichten aufweist, wobei eine erste Schicht ein Basisrahmenelement (9) aufweist oder durch ein solches Basisrahmenelement (9) gebildet ist, wobei eine zweite Schicht durch einen das Basisrahmenelement (9) umgebenden Mantel (11) gebildet ist und wobei im Basisrahmenelement (9) eine Kühleinrichtung mit einem Lüfter (17) angeordnet ist, **dadurch gekennzeichnet, dass** durch den Lüfter (17) eine Luftströmung (18a, 18b) erzeugbar ist, welche im Zwischenraum zwischen Basisrahmenelement (9) und Mantel (11) strömt.

2. Vorrichtung nach Anspruch 1, **dadurch gekennzeichnet, dass** das Basisrahmenelement (9) als Hohlkörper ausgebildet ist.

3. Vorrichtung nach Anspruch 1 oder 2, **dadurch gekennzeichnet, dass** der Sensor (8a, 8b) dem Basisrahmenelement (9) zugeordnet oder in dem Basisrahmenelement (9) angeordnet ist.

4. Vorrichtung nach einem der Ansprüche 1 bis 3, **dadurch gekennzeichnet, dass** die Kühleinrichtung in einem Verbindungsstück (7) des Basisrahmenelements (9) angeordnet ist.

5. Vorrichtung nach einem der Ansprüche 1 bis 4, **dadurch gekennzeichnet, dass** die Kühleinrichtung ein mit einem Kühlmedium gefülltes Kühlregister (14) aufweist.

6. Vorrichtung nach einem der Ansprüche 1 bis 5, **dadurch gekennzeichnet, dass** das Basisrahmenelement (9) mit Umgebungsluft (10) durchströmbar ist.

7. Vorrichtung nach einem der Ansprüche 1 bis 6, **dadurch gekennzeichnet, dass** die Luftströmung (18a, 18b) mittels einer Vorströmung (18a, 18b) von der Kühleinrichtung zu dem Sensor (8a, 8b) und einer Rückströmung von dem Sensor (8a, 8b) zur Kühleinrichtung zurück realisiert ist.

8. Vorrichtung nach einem der Ansprüche 1 bis 7, **dadurch gekennzeichnet, dass** die zweite Schicht einen im Wesentlichen geschlossenen Mantel (11) für die erste Schicht aufweist oder durch einen solchen Mantel (11) gebildet ist, wobei vorzugsweise die Rückströmung oder die Vorströmung zwischen dem Mantel (11) und dem Basisrahmenelement (9) realisiert ist.

9. Vorrichtung nach Anspruch 8, **dadurch gekennzeichnet, dass** der Mantel (11) aus mehreren - vorzugsweise mittels elastischer Membranen gekoppelten - Segmenten aufgebaut ist.

10. Vorrichtung nach einem der Ansprüche 1 bis 9, **dadurch gekennzeichnet, dass** eine weitere Schicht eine Strahlungsschutzeinrichtung (12), vorzugsweise ein Strahlungsschutzblech, für die erste oder die zweite Schicht aufweist oder durch eine solche Strahlungsschutzeinrichtung gebildet ist.

11. Vorrichtung nach Anspruch 10, **dadurch gekennzeichnet, dass** die weitere Schicht an der ersten Schicht oder an der zweiten Schicht vorzugsweise mittels einer Führung, insbesondere Kulissenführung, relativ zu der ersten Schicht oder der zweiten Schicht bewegbar oder verschiebbar gelagert ist.

12. Vorrichtung nach einem der Ansprüche 1 bis 11, **dadurch gekennzeichnet, dass** der Mantel (11) und/oder die Strahlungsschutzeinrichtung aus einem vorzugsweise polierten und/oder glänzenden Metall, vorzugsweise mit einem geringen Emissionsgrad, ausgebildet ist.

13. Vorrichtung nach einem der Ansprüche 1 bis 12, **dadurch gekennzeichnet, dass** die erste Schicht und/oder die zweite Schicht und/oder die weitere Schicht einen vorzugsweise mit einem Glas oder Wärmeschutzglas verschlossenen Durchgang für Sensorsignale zu und/oder von dem Objekt (4) aufweist.

14. Vorrichtung nach einem der Ansprüche 1 bis 13, **dadurch gekennzeichnet, dass** zwischen der zweiten Schicht und der weiteren Schicht ein mit einem vorgebbaren Fluidum, vorzugsweise mit Umgebungsluft (10), durchströmbarer Zwischenraum zur Erzeugung einer Fluidschicht gebildet ist.

15. Vorrichtung nach einem der Ansprüche 1 bis 14, **dadurch gekennzeichnet, dass** die erste Schicht mit der zweiten Schicht oder der weiteren Schicht und/oder dass die zweite Schicht mit der weiteren Schicht über ein punktuell wirkendes Verbindungsmittel gekoppelt ist oder sind.

## Claims

1. Apparatus (1) for determining the thickness of an object (4), in particular a strip-like or plate-like object (4), preferably for use in a hot-rolling process, having a frame (2) which has an upper member and a lower member (5, 6), wherein each member (5, 6) has a sensor (8a, 8b) for contactless distance measurement with respect to the object (4), wherein each member (5, 6), in order to reduce a temperature effect on the frame (2) and/or the sensor (8a, 8b), has a structure comprising a plurality of layers, wherein a first layer has a base frame element (9) or is formed by such a base frame element (9), wherein a second layer is formed by means of a cover (11) which surrounds the base frame element (9), and wherein a cooling device having a fan (17) is arranged in the base frame element (9), **characterised in that**, as a result of the fan (17), an air flow (18a, 18b) which flows in the intermediate space between the base frame element (9) and the cover (11) can be produced.

2. Apparatus according to claim 1, **characterised in that** the base frame element (9) is in the form of a hollow member.

3. Apparatus according to claim 1 or claim 2, **characterised in that** the sensor (8a, 8b) is associated with the base frame element (9) or is arranged in the base frame element (9).

4. Apparatus according to any one of claims 1 to 3, **characterised in that** the cooling device is arranged in a connection piece (7) of the base frame element (9).

5. Apparatus according to any one of claims 1 to 4, **characterised in that** the cooling device has a cooling register (14) which is filled with a cooling medium.

6. Apparatus according to any one of claims 1 to 5, **characterised in that** ambient air (10) can flow through the base frame element (9).

7. Apparatus according to any one of claims 1 to 6, **characterised in that** the air flow (18a, 18b) is produced by means of a forward flow (18a, 18b) from the cooling device to the sensor (8a, 8b) and a return flow from the sensor (8a, 8b) back to the cooling device.

8. Apparatus according to any one of claims 1 to 7, **characterised in that** the second layer has a substantially closed cover (11) for the first layer or is formed by such a cover (11), wherein the return flow or the forward flow is preferably produced between the cover (11) and the base frame element (9).

9. Apparatus according to claim 8, **characterised in that** the cover (11) is constructed from a plurality of segments, which are preferably coupled by means of resilient membranes.

10. Apparatus according to any one of claims 1 to 9, **characterised in that** an additional layer has a radiation protection device (12), preferably a radiation protection sheet, for the first or the second layer or is formed by such a radiation protection device.

11. Apparatus according to claim 10, **characterised in that** the additional layer is supported on the first layer or on the second layer so as to be able to be moved or displaced relative to the first layer or the second layer preferably by means of a guide, in particular a slotted guide.

12. Apparatus according to any one of claims 1 to 11, **characterised in that** the cover (11) and/or the radiation protection device is formed from a preferably polished and/or shiny metal, preferably having a low degree of emission.

13. Apparatus according to any one of claims 1 to 12, **characterised in that** the first layer and/or the second layer and/or the additional layer has a passage, which is preferably closed by means of a glass or heat protection glass, for sensor signals to and/or from the object (4).

14. Apparatus according to any one of claims 1 to 13, **characterised in that** between the second layer and the additional layer an intermediate space through which a predetermined fluid, preferably ambient air (10), can flow is formed in order to produce a fluid layer.

15. Apparatus according to any one of claims 1 to 14, **characterised in that** the first layer is coupled to the second layer or the additional layer and/or **in that** the second layer is coupled to the additional layer by way of a locally active connection means.

## Revendications

1. Dispositif (1) pour la détermination de l'épaisseur d'un objet (4), plus particulièrement d'un objet en forme de bande ou en forme de plaque (4), de préférence destiné à être utilisé lors d'un processus de laminage à chaud, avec un cadre (2) comprenant une branche supérieure et une branche inférieure (5, 6), dans lequel chaque branche (5, 6) comprend un capteur (8a, 8b) pour la mesure de distance sans contact par rapport à l'objet (4), dans lequel chaque branche (5, 6) présente, pour la réduction d'un effet de la température sur le cadre (2) et/ou le capteur (8a, 8b), une structure constituée de plusieurs couches, dans lequel une première couche comprend un élément de cadre de base (9) ou est constituée d'un tel élément de cadre de base (9), dans lequel une deuxième couche est constituée d'une enveloppe (11) entourant l'élément de cadre de base (9) et dans lequel, dans l'élément de cadre de base (9), se trouve un dispositif de refroidissement avec un ventilateur (17),
**caractérisé en ce que** le ventilateur (17) peut générer un écoulement d'air (18a, 18b) qui s'écoule dans l'espace intermédiaire entre l'élément de cadre de base (9) et l'enveloppe (11).

2. Dispositif (1) selon la revendication 1, **caractérisé en ce que** l'élément de cadre de base (9) est conçu comme un corps creux.

3. Dispositif selon la revendication 1 ou 2, **caractérisé en ce que** le capteur (8a, 8b) correspond à l'élément de cadre de base (9) ou est disposé dans l'élément de cadre de base (9).

4. Dispositif selon l'une des revendications 1 à 3, **caractérisé en ce que** le dispositif de refroidissement est disposé dans un élément de raccordement (7) de l'élément de cadre de base (9).

5. Dispositif selon l'une des revendications 1 à 4, **caractérisé en ce que** le dispositif de refroidissement comprend une batterie de refroidissement (14) remplie d'un fluide de refroidissement.

6. Dispositif selon l'une des revendications 1 à 5, **caractérisé en ce que** l'élément de cadre de base (9) peut être traversé par de l'air environnant (10).

7. Dispositif selon l'une des revendications 1 à 6, **caractérisé en ce que** l'écoulement d'air (18a, 18b) est réalisé au moyen d'un écoulement aller (18a, 18b) du dispositif de refroidissement vers le capteur (8a, 8b) et d'un écoulement de retour du capteur (8a, 8b) vers le dispositif de refroidissement.

8. Dispositif selon l'une des revendications 1 à 7, **caractérisé en ce que** la deuxième couche comprend une enveloppe (11) globalement fermée pour la première couche ou est constituée d'une telle enveloppe (11), dans lequel, de préférence, l'écoulement de retour ou l'écoulement aller est réalisé entre l'enveloppe (11) et l'élément de cadre de base (9).

9. Dispositif (1) selon la revendication 8, **caractérisé en ce que** l'enveloppe (11) est constituée de plusieurs segments, couplés de préférence au moyen de membranes élastiques.

10. Dispositif selon l'une des revendications 1 à 9, **caractérisé en ce qu'**une couche supplémentaire comprend un dispositif de protection contre les rayonnements (12), de préférence une tôle de protection contre les rayonnements, pour la première ou la deuxième couche ou est constituée d'un tel dispositif de protection contre les rayonnements.

11. Dispositif (1) selon la revendication 10, **caractérisé en ce que** la couche supplémentaire est logée au niveau de la première couche ou de la deuxième couche, de préférence au moyen d'un guidage, plus particulièrement d'un guidage à coulisse, de manière mobile ou coulissante par rapport à la première couche ou à la deuxième couche.

12. Dispositif (1) selon la revendication 11, **caractérisé en ce que** l'enveloppe (11) et/ou le dispositif de protection contre les rayonnements est constitué d'un métal de préférence poli et/ou brillant, de préférence avec une faible émissivité.

13. Dispositif selon l'une des revendications 1 à 12, **caractérisé en ce que** la première couche et/ou la deuxième couche et/ou la couche supplémentaire comprend un passage, de préférence scellé avec du verre ou un verre de protection thermique, pour les signaux de capteurs en direction et/ou en provenance de l'objet (4).

14. Dispositif selon l'une des revendications 1 à 13, **caractérisé en ce que**, entre la deuxième couche et la couche supplémentaire, est formée un espace intermédiaire, pouvant être traversé par un fluide prédéterminé, de préférence par de l'air environnant (10), pour la production d'une couche de fluide.

15. Dispositif selon l'une des revendications 1 à 14, **caractérisé en ce que** la première couche est couplée avec la deuxième couche et/ou la couche supplémentaire et/ou **en ce que** la deuxième couche est couplée avec la couche supplémentaire par l'intermédiaire d'un moyen de raccordement à action ponctuelle.
